# EUROPEAN PATENT APPLICATION

(11) **EP 4 538 574 A1**
(43) Date of publication of application: **16.04.2025**
(21) Application number: 23202867.0
(22) Date of filing: 11.10.2023
(51) Int. Cl.: F16L 25/02

(54) **COUPLING DEVICE**

(71) Applicant: BDR Thermea Group B.V., 7332 BD Apeldoorn (NL)
(72) Inventor: SIEGEL, Christophe, 7332 BD Apeldoorn (NL); STRUB, Jérémie, 7332 BD Apeldoorn (NL)
(74) Representative: Dennemeyer & Associates S.A.

(57) **Abstract**

The invention relates to a coupling device (1) for fluidically connecting a tank pipe (2) of a tank (8) to an external pipe (9), wherein the tank pipe (2) is made of a first electrical conductive material and the external pipe (9) is made of a second electrical conductive material, the first electrical conductive material being different from the second electrical conductive material, the coupling device (1) comprising:
a rotatable nut element (4) for contacting the tank pipe (2); and
a washer (6) positionable in contact with the external pipe (9) and between said external pipe (3) and the nut element (4) to uncouple the nut element (4) from the external pipe (3),
wherein the washer (6) is made of an electrical insulating material and the nut element (4) is made of the first electrical conductive material.

## Description

The invention relates to a coupling device for fluidically connecting a tank pipe of a tank to an external pipe. Also, the invention relates to a heating device for heating water comprising such a coupling device.

A heating device like a heat pump is a device able to warm domestic water by transferring thermal energy to water by means of a heat exchanger. Water is hold and heated inside a tank and is supplied outside the tank by means of a pipe assembly. The pipes are usually made of metallic materials. However, the contact between two different metallic parts in presence with an electrolyte, such as water, provides galvanic corrosion which can result in a water leakage.

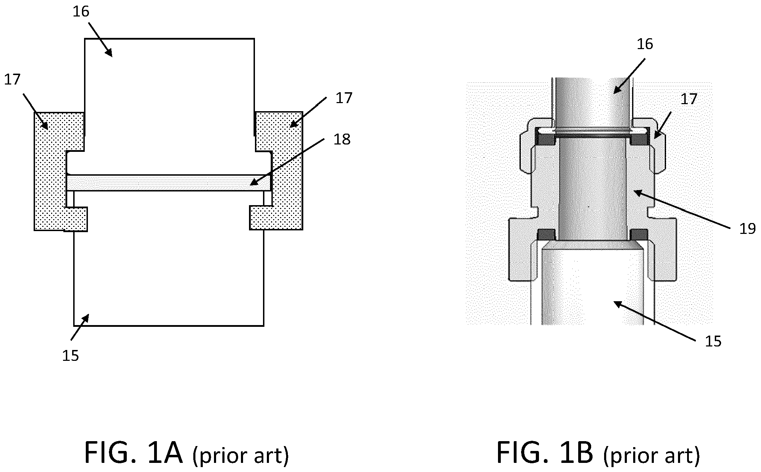

A prior art configuration to connect two pipes of different materials, for example a steel pipe 15 and a copper pipe 16 is shown in figure 1A. A turning brass nut 17 is in contact with the steel pipe 15 and provides a galvanic torque, thereby generating corrosion. The use of a fiber gasket 18 which soak itself with electrolyte also provides a galvanic torque between the copper pipe 16, in particular its beaten collar, and the steel pipe 15, and produces therefore corrosion. In other words, in a standard configuration, two possible sources of corrosion can occur, one between the two pipes and the other between one pipe and the nut. A possible prior art solution to avoid said corrosion issues, is illustrated in figure 1B. In this case, an additional dielectric fitting in plastic 19 can be placed between the steel pipe 15 and the copper pipe 16 for uncoupling the pipes of different materials. However, this solution can be achieved with additional costs. Also, there are two tightness devices, thereby increasing leakage risks.

It is therefore desirable to obtain a coupling device that is efficient and that can be produced at low-cost. In addition, it is desirable to obtain a coupling device that is compact.

The object is solved by a coupling device for fluidically connecting a tank pipe of a tank to an external pipe, wherein the tank pipe is made of a first electrical conductive material and the external pipe is made of a second electrical conductive material, the first electrical conductive material being different from the second electrical conductive material, the coupling device comprising:
a rotatable nut element for contacting the tank pipe; and
a washer positionable in contact with the external pipe and between said external pipe and the nut element to uncouple the nut element from the external pipe, wherein the washer is made of an electrical insulating material and the nut element is made of the first electrical conductive material.

In this way, by suitably positioning a single electrical insulating washer between the nut and the external pipe and thus uncouple the nut element from the external pipe, it is ensured that the nut does not contact the external pipe. In addition, by using a nut element made of the same material of the tank pipe, there is no risk of a galvanic corrosion between two metal components of different materials. Furthermore, since the washer is a relatively small element having a ring shape, it is not bulky and the connection can result compact and suitable to couple pipes of any shape, such as for example bent pipes. Another advantage of the coupling device is that it can be used to directly fluidically couple the tank pipe with the external pipe. Thus, a compact arrangement is achieved as there is no need for adding further parts between the tank pipe and the external pipe.

With the expression "fluidically connecting" is intended here that the two hollow elements (i.e. the two pipes) are connected or coupled to allow the passage of a fluid, e.g. a liquid as water, though their internal cavities. In particular, the coupling device is placed at the connection region of the two hollow elements and is configured to allow the passage of the fluid from a hollow element to the other hollow element, by avoiding any possible leakage at the connection region.

The tank pipe and the remaining part of the tank can be formed as a single part. The external pipe is not part of the tank and can be a part of a pipe system by means of which water is supplied for domestic use. The heating device can comprise a heat pump that is fluidically connected to the tank. Additionally, the heating device can be part of a heating system to supply water for domestic use.

In examples, the coupling, in particular dielectric connection arrangement, further comprises a gasket positionable between the two hollow elements to uncouple the tank pipe from the external pipe. As above "uncouple" means that two components do not contact each other. Specifically, the tank pipe and the external pipe do not contact each other due to the gasket. In addition to tight the connection, the gasket also serves to avoid a galvanic corrosion between the two hollow elements (i.e. the two pipes) that are made of two different conductive materials, i.e. two different metals. Since the gasket is a relative small element, it is not affecting the compactness of the entire arrangement.

Advantageously, the gasket is compressed between the two hollow elements. In other words, the gasket is only compressed and there is no rotation of the gasket so that the risk of deterioration due to friction is eliminated.

Specifically, the gasket is made of an electrical insulating material, in particular of silicone. The material of the gasket can be selected to facilitate the positioning of the gasket between the two hollow elements and to improve the stability of the connection.

In examples, the washer is made of plastic and the nut element is made of steel. The plastic can be selected of a particular hardness so as to increase the adaptability of the washer shape to the space between the nut and the external pipe, especially by screwing the nut. By using a nut element of steel, the tank pipe, in contact with the nut, can also be made of steel.

In examples, the washer comprises a washer collar. The washer collar serves to avoid any direct contact between the nut element and the external pipe in case the external pipe is provided itself with a collar element. The washer collar is made of an electrical insulating material, in particular of the same material of the washer, more in particular is made of plastic. The external pipe can be made of copper.

According to an aspect of the invention a heating device for heating water is provided. The heating device comprises the tank, in particular water tank, having the tank pipe an external pipe being arranged outside the tank and an inventive coupling device. The coupling device is used to fluidically connect the tank pipe to the external pipe.

The external pipe can comprise a collar element at one end, and the gasket of the coupling device is positioned between the tank pipe and the external pipe to uncouple the tank pipe from the external pipe, the collar element being placed between the gasket and the washer. The collar element serves to improve the closing action of the nut with the hollow elements. In particular, the washer is located between the nut element and the collar element to avoid any coupling between the main body and the nut element.

In examples, the external pipe is bent, in particular comprises a curved elbow portion. In this way, the external pipe can be connected to the tank pipe even at locations where for example the space of the pipe assembly can be an issue.

In an additional aspect of the invention, a use of an inventive coupling device, in particular dielectric coupling device, to fluidically connect a tank pipe to an external pipe of a heating device, in particular a heat pump water heater. The heating device can be part of a heating system to supply water for domestic use.

In the figures, the subject-matter of the invention is schematically shown, wherein identical or similarly acting elements are usually provided with the same reference signs.
- Figure 1A: shows a schematic representation of a first coupling device according to prior art.
- Figure 1B: shows a schematic representation of a second coupling device according to prior art.
- Figure 2: shows a schematic representation of the coupling device according to an example.
- Figure 3A: shows a schematic representation of the coupling device according to an example.
- Figure 3B: shows a schematic representation of the tank and of the heating device (in part) according to an example.

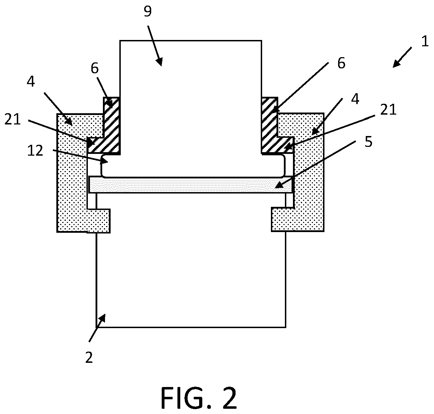

Figure 2 illustrates a coupling device 1, in particular a dielectric coupling device, applied to connect a tank pipe 2 to an external pipe 9. The two pipes 2, 9 are configured to allow the passage of a fluid, such as water, inside their cavities. One of the pipe, the external pipe 9, is provided with a collar element 12 at one end. The coupling device 1 serves to connect the tank pipe 2 to the external pipe 9 at a connection region at the collar element 12. According to this example, the tank pipe 2 is made of steel, whereas the external pipe 9 is made of copper. The collar element 12 is therefore a beaten copper portion of the second pipe 3.

The coupling device 1 comprises a fastener component such as nut element 4 that is used to make secure the connection of the two pipes and avoid any fluid leakage at the connection region. The nut element 4 is made of steel and in the fastening action it enters into contact with the tank pipe 2, also made of steel. Accordingly, the contact between the nut element 4 and the tank pipe 2 does not produce a galvanic corrosion since made of the same material.

Between the nut element 4 and the external pipe 9, it is placed a washer 6. Since the washer 6 is made of plastic material, there is provided an electrical insulation between the nut element 4 and the external pipe. Accordingly, even if the external pipe 9 is made of a different material (i.e. different metal) compared to the nut element 4, no galvanic corrosion is produced. It is noted that the washer 6 is provided with a washer collar 21 (also made of plastic) to avoid any contact between the copper collar element 12 of the external pipe 9 and the nut element 4 during the fastening action. Thus, it is ensured that the nut element 4 and the external pipe 9 are not in contact with each other and thus uncoupled. The width of the washer collar 21 is such that the nut element 6 is prevented from touching the collar element 12 of the external pipe 9 when fastened.

In addition, a gasket 5 made of silicon is placed between the tank pipe 2 and the external pipe 9. The gasket 5 is advantageously used to uncouple the steel pipe 2 from the copper pipe 9.

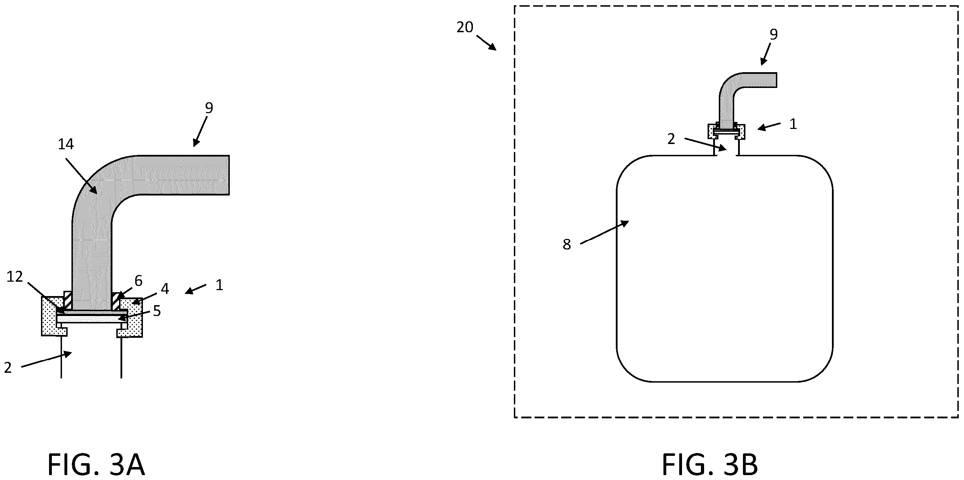

Figures 3A and 3B illustrate a coupling device 1 used to couple the tank pipe 11 to the external pipe 9 that is outside the tank 8. An example of tank 8, i.e. water tank, is schematically illustrated in figure 3B. The external pipe 9 differs from the external pipe 9 shown in figure 2 in that the external pipe is bent.

As already explained, the coupling device 1 serves to couple the external pipe 9, independent on whether the external pipe 9 is bended or not, to the tank pipe 11, thereby avoiding a galvanic corrosion between pipes of different materials. For example, the tank pipe 11 is made of steel and the main body 10 is made of copper.

The external pipe 9 is bent and comprises a curved elbow portion 14. Of course, the external pipe 8 can be a straight pipe as shown in figure 2 or can have other bent configurations, for example comprising more than one curved elbow portions 14.

### Reference Signs

- 1: Coupling device
- 2: tank pipe
- 4: Steel nut element
- 5: Gasket
- 6: Plastic washer
- 8: Tank
- 9: External pipe
- 12: Collar element
- 14: Elbow portion
- 15: Steel pipe
- 16: Copper pipe
- 17: Brass nut
- 18: Fiber gasket
- 19: Plastic fitting
- 20: Heating device
- 21: Washer collar

## Claims

1. Coupling device(1) for fluidically connecting a tank pipe (2) of a tank (8) to an external pipe (9), wherein the tank pipe (2) is made of a first electrical conductive material and the external pipe (9) is made of a second electrical conductive material, the first electrical conductive material being different from the second electrical conductive material, the coupling device (1) comprising:
a rotatable nut element (4) for contacting the tank pipe (2); and
a washer (6) positionable in contact with the external pipe (9) and between said external pipe (3) and the nut element (4) to uncouple the nut element (4) from the external pipe (3),
wherein the washer (6) is made of an electrical insulating material and the nut element (4) is made of the first electrical conductive material.

2. Coupling device (1) according to claim 1, **characterized in that** the coupling device (1) comprises a gasket (5) positionable between the tank pipe (2) and the external pipe (9) to uncouple the tank pipe (2) from the external pipe (9).

3. Coupling device (1) according to claim 2, **characterized in that** the gasket (5) is compressed between the tank pipe (2) and the external pipe (9).

4. Coupling device (1) according to any one of claims 2 to 3, **characterized in that** the gasket (5) is made of an electrical insulating material, in particular of silicone.

5. Coupling device (1) according to any one of claims 1 to 4, **characterized in that** the washer (6) is made of plastic and the nut element (4) is made of steel.

6. Coupling device (1) according to any one of claims 1 to 5, **characterized in that** the washer (6) comprises a washer collar (21).

7. Heating device (20) for heating water, in particular a heat pump water heater, the heating device (20) comprising a tank (8), in particular a water tank, having a tank pipe (2), an external pipe (9) outside the tank (8) and the coupling device (7) according to any one of claims 1 to 6 to fluidically connect the tank pipe (2) to the external pipe (9).

8. Heating device (20) according to claim 7, **characterized in that** the tank pipe (2) is made of steel.

9. Heating device (20) according to claim 7 or 8, **characterized in that** the external pipe (9) is made of copper.

10. Heating device (20) according to at least one of the claims 7 to 9, **characterized in that** the external pipe (9) comprises a collar element (12) at one end, and the gasket (5) of the coupling device (1) is positioned between the tank pipe (2) and the external pipe (9) to uncouple the tank pipe (2) from the external pipe (9), the collar element (12) being placed between the gasket (5) and the washer (6).

11. Heating device (20) according to at least one of the claims 7 to 10, **characterized in that** the external pipe (9) is bent, in particular comprises a curved elbow portion.

12. Heating device (20) according to at least one of the claims 7 to 11, **characterized in that** the washer (6) is in contact with the external pipe (9) and the nut element (4).

13. Use of a coupling device (1) according to any one of claims 1 to 6 to fluidically connect a tank pipe (11) of a tank (8) of a heating device (20) to an external pipe (9) of the heating device (20).
